# FASCICULE DE BREVET EUROPEEN

(11) **EP 3 350 065 B1**
(45) Date de publication et mention de la délivrance du brevet: **25.12.2019**
(21) Numéro de dépôt: 16775770.7
(22) Date de dépôt: 02.09.2016
(51) Int. Cl.: E05D 5/06, B62D 25/10, E05F 5/02, B62D 25/12

(54) **COFFRE D'UN VEHICULE AUTOMOBILE**
KOFFERRAUM FÜR KRAFTFAHRZEUG
MOTOR VEHICLE BOOT

(30) Priorité: 18.09.2015 FR 1558832
(43) Date de publication de la demande: 25.07.2018
(73) Titulaire: Renault s.a.s., 92100 Boulogne-Billancourt (FR)
(72) Inventeur: DEGAUGUE, Rémi, 27160 Breteuil Sur Iton (FR)
(86) Numéro de dépôt international: PCT/FR2016/052183
(87) Numéro de publication internationale: WO 2017/046470

(56) Documents cités:
- DE-A1-102012 210 193
- FR-A1- 2 916 009
- US-A- 3 643 755
- US-A1- 2006 279 105
- US-A1- 2014 333 087

## Description

La présente invention concerne un coffre d'un véhicule automobile comprenant au moins un élément de support pourvu d'un élément d'appui tel qu'une butée, prévu pour coopérer avec un bras d'articulation d'une porte de coffre mobile en rotation.

L'invention concerne aussi un véhicule automobile comprenant un tel coffre.

Traditionnellement, le coffre d'un véhicule automobile est compris dans une partie arrière de ce dernier et comprend une porte de coffre mobile en rotation qui est susceptible d'assurer l'ouverture et la fermeture de ce coffre. Cette porte de coffre est formée de manière générale d'un panneau de porte relié à deux bras latéraux parallèles en forme de col de cygne dont les extrémités libres sont montées pivotantes sur un élément de carrosserie situé à l'intérieur du coffre.

Dans l'état de la technique et en particulier dans le brevet US8915532, afin de minimiser les efforts qu'un individu doit fournir pour ouvrir la porte de coffre, il est connu que le coffre comprend généralement un dispositif d'entrainement de la porte de coffre qui est apte à contribuer à la réalisation d'un pivotement de cette porte entre une position de fermeture sensiblement horizontale et une position d'ouverture maximale se rapprochant de la position verticale. Un tel dispositif d'entrainement comprend des barres de torsion reliées aux bras de la porte de coffre par un élément assurant une liaison cinématique. Dans cette configuration, de telles barres sont configurées de manière à favoriser l'ouverture de la porte, une fois que celle-ci a été déverrouillée de sa position de fermeture, pour être ouverte en exerçant une force de rappel sur chaque bras via l'élément assurant la liaison cinématique pour faciliter le pivotement de cette porte vers sa position d'ouverture maximale.

Cependant, un des inconvénients majeur d'un tel coffre réside dans le fait qu'il ne permet pas au regard de sa configuration d'assurer une ouverture de la porte de coffre qui soit sécurisée pour l'utilisateur du véhicule. En effet, cet utilisateur peut subir des dommages corporels résultant d'un choc avec la porte de coffre du fait d'un phénomène de rebonds lié à l'ouverture de cette dernière lorsqu'elle atteint sa position d'ouverture maximale. De plus, un tel phénomène de rebonds est susceptible de provoquer une usure prématurée du dispositif d'entrainement qui dans ces conditions est fortement sollicité.

Le document DE 10 2012 210193 A1 décrit un élément de support, agencé dans un coffre de véhicule automobile, comprenant des faces de montage, une des faces de montage étant susceptible de coopérer avec un bras d'articulation d'une porte de coffre lorsqu'elle est en position complète d'ouverture.

La présente invention vise à pallier ces inconvénients liés au coffre de véhicule de l'état de la technique.

Dans ce dessein, l'invention concerne un élément de support notamment un pontet, agencé dans un coffre de véhicule automobile, comprenant des première, deuxième et troisième faces de montage, une des faces de montage notamment la première face, étant susceptible de coopérer avec un bras d'articulation d'une porte de coffre lorsqu'elle est en position complète d'ouverture, les faces de montage étant respectivement comprises dans des plans formant entre eux des angles supérieures ou égales à 90°.

Dans d'autres modes de réalisation :
- une des faces de montage notamment la première face comprend au moins un élément d'appui ;
- chaque face de montage est pourvue d'au moins une zone de fixation notamment comprenant au moins une ouverture destinée à la fixation d'un revêtement de coffre ou d'un élément d'appui ;
- l'élément de support comprend des pattes de fixation notamment des première, deuxième et troisième pattes de fixation dudit élément de support à un élément structurel du coffre ;
- l'élément de support comprend au moins deux pattes de fixation notamment des deuxième et troisième pattes de fixation, comprises dans un même plan ;
- l'élément de support est une pièce monobloc, et
- l'élément d'appui est déformable.

L'invention concerne également un coffre d'un véhicule automobile notamment un coffre arrière, comprenant une enceinte de chargement et une porte de coffre mobile en rotation susceptible de fermer ladite enceinte lorsqu'elle est dans une position de fermeture, le coffre comportant au moins un tel élément de support susceptible de coopérer avec ladite porte de coffre notamment avec au moins un bras d'articulation de ladite porte de coffre lorsqu'elle est dans une position complète d'ouverture.

Dans d'autres modes de réalisation :
- chaque bras d'articulation comprend une interface d'appui dépourvue d'un élément d'appui ;
- chaque bras d'articulation comprend une interface d'appui pourvue d'au moins un élément d'appui ;
- ledit au moins un élément de support est monté sur un élément structurel de séparation d'un habitacle du véhicule de ladite enceinte de chargement ;
- l'élément de support est monté de manière amovible sur ledit élément structurel, et
- au moins un élément d'appui et/ou au moins un élément de garniture du coffre sont agencés sur les faces de montage de l'élément de support.

L'invention concerne aussi un véhicule, notamment de type tricorps, comprenant un tel coffre.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 représente une vue d'une partie arrière d'un véhicule automobile de type tricorps selon un mode de réalisation de l'invention ;
- la figure 2 représente une vue à plus grande échelle d'une partie A de la figure 1 relative à une partie arrière gauche d'un coffre du véhicule selon le mode de réalisation de l'invention, et
- les figures 3A, 3B et 4 représentent des vues différentes d'un élément de support monté sur un élément structurel du coffre selon le mode de réalisation de l'invention.

La description est faite en référence à un repère orthonormé (X, Y, Z) associé classiquement à un véhicule automobile, dans lequel X est la direction longitudinale avant-arrière du véhicule dirigée vers l'arrière, Y est la direction transversale droite-gauche au véhicule, qui est horizontale et perpendiculaire à X, dirigée vers la droite, et Z est la direction verticale dirigée vers le dessus. Par ailleurs, les termes « avant, arrière, droit, gauche, horizontal, vertical, supérieur, inférieur » sont définis par rapport au sens de déplacement du véhicule.

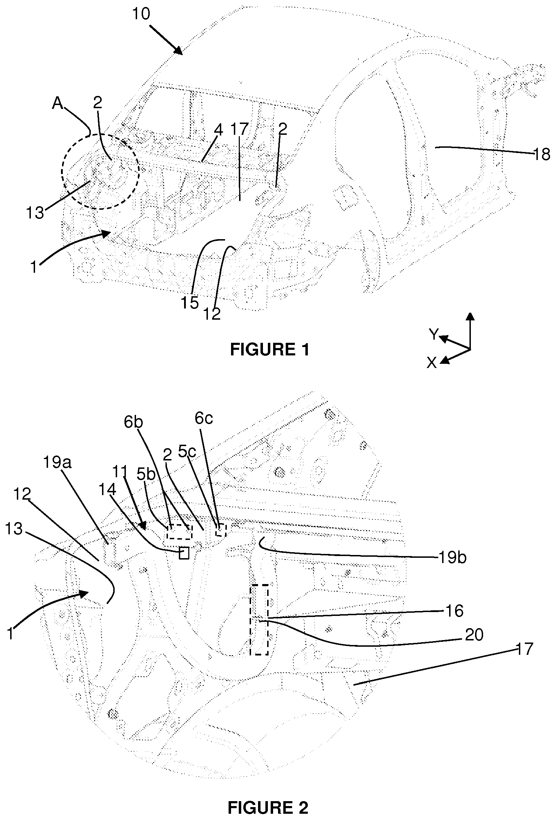

Un mode de réalisation de l'invention est représenté sur la figure 1, comprenant une partie arrière d'un véhicule 10 automobile pourvue d'un coffre 1 également appelé « coffre arrière », « bloc arrière » ou encore « compartiment à bagages ».

Dans ce mode de réalisation, le véhicule 10 automobile est de type « tricorps » c'est-à-dire qu'il comporte à l'avant un compartiment moteur, au milieu un habitacle et à l'arrière le coffre 1. Un tel véhicule 10 peut comprendre quatre portes individuelles pour les occupants avec une structure de caisse présentant une première ligne de rupture entre un capot du moteur et un pare-brise, et une seconde ligne de rupture entre une lunette arrière et le coffre 1 du véhicule 10, la lunette arrière étant fixée à la structure de caisse.

Sur les figures 1 et 2, le coffre 1 comprend une enceinte 17 définissant un volume de chargement du coffre 1, également appelée « enceinte de chargement ». Le coffre 1 comprend également :
- un élément structurel 4 de séparation d'un habitacle 18 du véhicule 10 de l'enceinte 17 de chargement ;
- un plancher 15 de coffre 1 ;
- des parois latérales 13 gauche et droite, et
- une porte de coffre (non représentée) qui participe à délimiter le volume de cette enceinte 17.

Dans cette configuration, l'élément structurel 4 qui peut être une tablette arrière, comprend une face inférieure 8a positionnée en regard du plancher 15 du coffre 1 et comprise dans un plan sensiblement parallèle à un plan dans lequel est compris ce plancher 15. Cet élément structurel 4 comprend également une face arrière 8b reliée à la face inférieure 8a par un bord arrière 8c dudit élément structurel 4. Ces faces inférieure et arrière 8a, 8b peuvent être comprises dans des plans sensiblement perpendiculaires entre eux. Les faces inférieure et arrière 8a, 8b sont pourvues de zones de fixation (non représentées) agencées au niveau de leurs extrémités à proximité du bord arrière 8c de l'élément structurel 4. Ces zones de fixation peuvent comprendre des orifices contribuant à participer à une liaison mécanique entre l'élément structurel 4 et un élément de support 2 qui est décrit par la suite.

La porte de coffre encore appelée « capot arrière » est une porte mobile en rotation qui assure l'ouverture/fermeture du coffre 1 en autorisant/interdisant l'accès à ce coffre 1 au travers de son ouverture 17. Cette porte de coffre vu de profil a la forme générale d'un « L » et comprend un panneau principal plan prolongé par un bord plan, le panneau et le bord plan faisant entre eux un angle sensiblement supérieur ou égal à 90°. Le panneau principal de cette porte de coffre possède une surface plus importante que celle du bord qui le prolonge.

La porte de coffre est pourvue de deux bras d'articulation 11 qui sont identiques et parallèles entre eux et qui présentent chacun un profil en col de cygne. Chacun de ces bras 11 comprend des première et deuxième extrémités 19a, 19b. La première extrémité 19a est rigidement fixée à la porte de coffre et en particulier au panneau principal de ce dernier par exemple par soudage, et la deuxième extrémité 19b est montée en rotation à l'intérieur du coffre 1 de sorte à être pivotante autour d'un axe horizontal et transversal du véhicule 10. Ces bras 11 s'étendent dans un plan vertical et longitudinal du véhicule 10. Ainsi, les deux bras 11 sont amenés à pivoter autour d'un axe transversal et sensiblement horizontal du véhicule 10, en demeurant chacun dans un plan sensiblement vertical et longitudinal dudit véhicule 10. Ces bras d'articulation 11 comprennent également chacun une interface d'appui 16 qui est susceptible de coopérer avec l'élément de support 2 qui est décrit par la suite. Cette interface d'appui peut comprendre une ouverture 20.

Le coffre 1 comprend aussi un dispositif d'entrainement (non représenté) qui permet de faire pivoter la porte du coffre 1 entre une position de fermeture et une position de complète ouverture après que la porte ait été déverrouillée de sa position de fermeture. Cette position de fermeture de la porte se traduit schématiquement par un panneau principal en position horizontale et un bord en position verticale. La position complète ou maximale d'ouverture de ladite porte correspond à un panneau principal fortement incliné, pouvant être vertical, et à un bord sensiblement horizontal. Ce dispositif d'entrainement peut comprendre un levier rigide qui est solidarisé à chacun des bras 11, et un ressort à spirales précontraint reliant ledit levier à un élément de carrosserie fixe délimitant latéralement le coffre 1. Plus précisément, un point d'ancrage du ressort est réalisé sur le levier et l'autre point d'ancrage s'effectue sur la surface interne d'une paroi latérale 13 du véhicule 10, dans une zone située à l'arrière du coffre 1. Ainsi, lorsqu'un individu ouvre la porte du coffre 1, les ressorts exercent une force de traction au niveau du levier de chaque bras 11, en se contractant pour tenter de retrouver leur forme naturelle, cet effort contribuant à favoriser la rotation de chaque bras 11 pour faciliter l'ouverture de la porte du coffre jusqu'à sa position de complète d'ouverture.

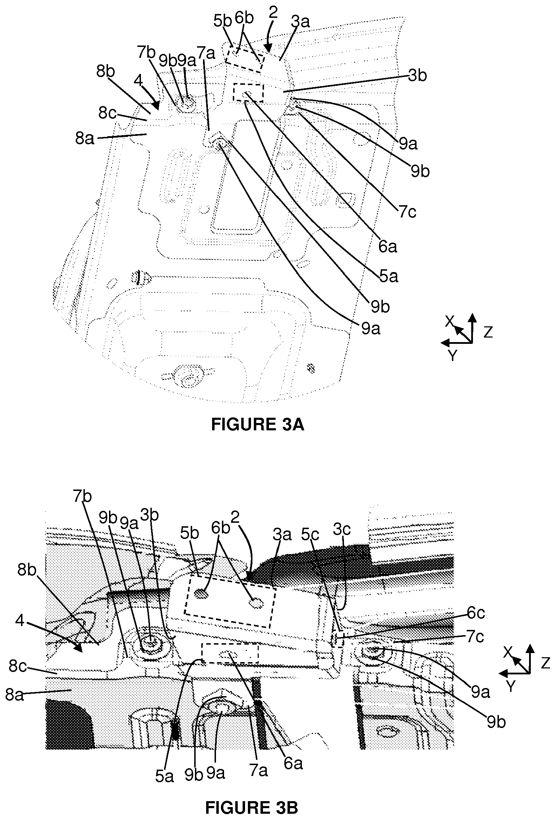

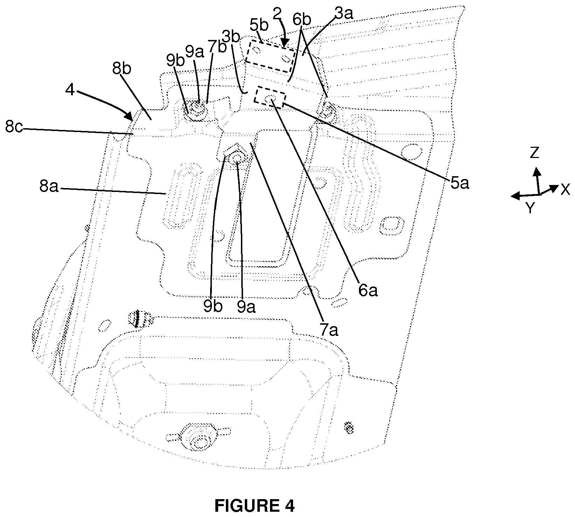

Ce coffre 1 comprend également au moins un élément de support 2 autrement appelé pontet visible sur les figures 3A, 3B et 4. Plus précisément, le coffre 1 comprend de préférence autant d'éléments de support que la porte de coffre comprend de bras d'articulation 11, dans ce mode de réalisation il en comprend deux. Chaque élément de support 2 est de préférence une pièce monobloc réalisée en matériau métallique.

Un tel élément de support 2 peut être obtenu à partir d'un procédé de fabrication comprenant des étapes de :
- détermination en fonction des caractéristiques structurelles du coffre 1 :
   - d'une stratégie de découpe d'une feuille métallique telle qu'une feuille de tôle ;
   - d'une stratégie de pliage de ladite feuille métallique découpée;
- découpe de la feuille métallique selon la stratégie de découpe déterminée, et
- pliage de la feuille métallique découpée selon la stratégie de pliage déterminée.

L'élément de support 2 ainsi obtenu à une section longitudinale X qui est ouverte et qui présente une forme générale trapézoïdale et une section transversale Y également ouverte et qui présente une forme générale rectangulaire.

L'élément de support 2 comprend plusieurs faces de montage 3a, 3b, 3c, des première 3a, deuxième 3b et troisième 3c faces de montage qui sont chacune sensiblement planes. Ces première, deuxième et troisième faces de montage 3a, 3b, 3c, sont respectivement comprises dans des plans formant entre eux des angles sensiblement supérieures ou égales à 90°. La première face de montage 3a comprend une zone de fixation 5a au niveau de laquelle un élément d'appui 14 de préférence déformable tel qu'une butée, peut être agencé. Les deuxième et troisième faces de montage 3b, 3c, comprennent également chacune une zone de fixation 5b, 5c, prévue pour assurer la fixation d'au moins un élément de garniture tel que par exemple un revêtement du coffre 1 de type moquette. Ces zones de fixation 5a, 5b, 5c des première, deuxième et troisième faces de montage 3a, 3b, 3c peuvent comprendre chacune au moins une ouverture 6a, 6b, 6c qui est susceptible de participer à la réalisation d'une liaison mécanique entre ces faces de montage 3a, 3b, 3c, et l'élément d'appui 14a et l'élément de garniture.

L'élément de support 2 comprend également des pattes de fixation 7a, 7b, 7c, pour le montage amovible de cet élément 2 sur l'élément structurel 4. Plus précisément, l'élément de support 2 comporte des première 7a, deuxième 7b et troisième 7c pattes de fixation. La première patte de fixation 7a est définie dans le prolongement de la première face de montage 3a et s'étend vers l'avant du véhicule 10 selon une direction longitudinale X. La deuxième patte de fixation 7b est aussi définie dans le prolongement de la première face de montage 3a et forme avec cette dernière un angle sensiblement perpendiculaire en s'étendant vers une des parois latérales 13 du coffre 1 dans une direction transversale Y. La troisième patte de fixation 7c est également définie dans le prolongement de la troisième face de montage 3c et forme avec cette dernière un angle sensiblement perpendiculaire en s'étendant vers une des parois latérales 13 du coffre 1 dans une direction transversale Y.

On notera que les deuxième et troisième pattes de fixation 7b, 7c, peuvent être comprises dans un même plan. Ces trois pattes de fixation 7a, 7b, 7c peuvent comprendre chacune une zone de fixation (non représentée) qui peut être pourvue d'au moins un orifice contribuant à participer à la liaison mécanique entre l'élément de support 2 et l'élément structurel 4.

Lors du montage des éléments de support 2 sur l'élément structurel 4, la première patte de fixation 7a de chaque élément de support 2 est positionnée sur la face inférieure 8a de l'élément structurel 4 de manière à ce que les zones de fixation de cette première patte 7a et celle de la face inférieure 8a puisse être assemblées l'une avec l'autre par exemple par vissage ou encore soudage. Dans cette configuration, lorsque ces zones de fixation sont pourvues d'orifices, ces derniers sont agencés l'un par rapport à l'autre de manière à être traversés par une tige filetée d'une vis 9a qui en coopérant avec un écrou 9b permet d'assurer un accouplement de ces zones de fixation entre elles.

Dans le cadre ce montage, les deuxième et troisième pattes 7b, 7c de chaque élément de support 2 sont positionnées sur la face arrière 9b de l'élément structurel 4 de manière à ce que leur zone de fixation puisse être assemblée avec celle de la face arrière 8b, par exemple par vissage ou encore soudage. Comme nous l'avons vu précédemment, lorsque chaque zone de fixation de ces deuxième et troisième pattes comprend un orifice, ce dernier est positionné par rapport à l'orifice correspondant sur la zone de fixation de la face arrière de manière à être traversés tous les deux par une tige filetée d'une vis 9a qui en coopérant avec un écrou 9b permet d'assurer un accouplement de ces zones de fixation entre elles.

Lorsque chaque élément de support 2 est monté sur l'élément structurel 4, la première face de montage 3a de cet élément de support 2 peut être agencée en regard du plancher 15 du coffre 1 et également en vis à vis de l'interface d'appui 16 du bras d'articulation 11 de la porte de coffre avec lequel il est susceptible de coopérer lorsque cette porte est dans une position complète d'ouverture. Cette première face de montage 7a qui est susceptible de comprendre au moins un élément d'appui 14 est agencé de manière à pourvoir coopérer avec un des deux bras d'articulation 11 du coffre 1, en particulier avec une partie du bras d'articulation 11 au niveau de laquelle est définie l'interface d'appui 16. L'élément d'appui 14 de cet élément de support 2, est positionné sur cette première face de montage 3a de sorte à pouvoir subir un écrasement exercé par l'interface d'appui 16 du bras d'articulation 11 de la porte de coffre, lorsque cette dernière atteint une position d'ouverture plus précisément une position complète d'ouverture. Un tel élément d'appui 14 peut être défini par une structure particulière comprenant par exemple une cavité creuse et permettant de réaliser une déformation particulière de l'élément d'appui 14. Dans une telle configuration, lorsque la porte du coffre est sur le point d'atteindre une position de complète ouverture, l'élément d'appui 14 en se déformant contribue à réaliser un amortissement progressif et unilatéral de la porte de coffre, jusqu'à une stabilisation finale, sans possibilité de rebonds. Autrement dit, une telle déformation de l'élément d'appui est réalisée de manière progressive jusqu'à ce que la porte du coffre atteigne sa position complète ou maximale d'ouverture, position durant laquelle l'élément d'appui 14 reste alors figée dans sa position déformée. Il en résulte que la porte de coffre ne subit aucun rebond intempestif avant de se stabiliser dans sa position complète d'ouverture, et qu'elle se retrouve maintenue dans cette position. Chaque élément d'appui 14 comprend de préférence un plot doté d'une tête élargie permettant d'assurer sa fixation sur l'élément de support 2 au moyen d'une insertion dudit plot dans l'ouverture 6a comprise dans la zone de fixation 5a de la première face de montage 3a.

Un tel élément d'appui 14 est de préférence réalisé en matériau flexible ou élastique comme par exemple du caoutchouc. Il est monté dans chaque élément de support 2 par une simple manipulation, ne nécessitant aucun outillage ni effort particulier. Une simple pression manuelle exercée sur la butée, permet de faire pénétrer la tête élargie dans chaque ouverture 6a de la zone de fixation 5a de la première face de montage 3a. Préférentiellement, la tête élargie est de forme tronconique, pour favoriser son insertion dans ladite ouverture et pour empêcher son retrait de cette dernière. On notera que chaque élément d'appui 14 est réalisé en caoutchouc et peut avoir une dureté Shore inférieure à 75 Sh, qui est de préférence égale à 70 Sh.

Dans une variante, selon le même principe évoqué précédemment, chaque bras d'articulation 11 peut comprendre au moins un élément d'appui 14 au niveau de l'interface d'appui 16 de manière à pourvoir coopérer avec la première face de montage 3a de l'élément de support 2 correspondant. Dans cette configuration, chaque élément d'appui 14 est monté sur le bras d'articulation 11 au moyen d'une insertion du plot dans l'ouverture 20 comprise dans l'interface d'appui 16 de ce bras 11.

Dans ces conditions, les différentes configurations suivantes du coffre 1 peuvent être réalisées lorsque ce dernier comprend deux éléments de support 2 et une porte de coffre pourvue de deux bras d'articulation 11 :
- l'interface d'appui 16 de chaque bras d'articulation 11 est dépourvue d'un élément d'appui 14 et les éléments de support comprennent chacun au moins un élément d'appui 14 agencé sur la première face de montage 3a, ou
- l'interface d'appui 16 de chaque bras d'articulation 11 est pourvue d'au moins un élément d'appui 14 et les éléments de support sont chacun dépourvus d'un élément d'appui 14, ou
- seule l'interface d'appui 16 d'un des deux bras d'articulation 11 est pourvue d'au moins un élément d'appui 14 et seul l'élément de support susceptible de coopérer avec ce dit bras 11 est dépourvu d'un élément d'appui 14, ou
- l'interface d'appui 16 de chaque bras d'articulation 11 est pourvue d'au moins un élément d'appui 14 et les éléments de support comprennent également chacun au moins un élément d'appui 14 agencé sur la première face de montage 3a.

Lorsque chaque élément de support 2 est monté sur l'élément structurel 4, la deuxième face de montage 3b est positionnée en regard de l'ouverture 12 du coffre 1 et en particulier du bord plan de la porte de coffre lorsque cette dernière est dans la position de fermeture. S'agissant de la troisième face de montage 3c, elle est quant à elle située en regard d'une des deux parois latérales 13 du coffre 1. Ainsi que nous l'avons vu, ces deuxième et troisième faces de montage 3b, 3c, comprennent chacune une zone de fixation 5b, 5c, au niveau de laquelle au moins un élément de garniture agencé dans le coffre 1 peut être fixé. Cet élément de garniture peut être destiné à équiper une des deux parois latérales 13 du coffre 1 ou encore le plancher 15 de ce dernier. L'élément de garniture est fixé directement sur les deuxième et troisième faces de montage 3b, 3c, au moyen de fixations de type clips plastiques coopérant avec des ouvertures ménagées dans l'élément de garniture et les ouvertures 6b, 6c comprises dans les zones de fixation 5b, 5c, de ces faces de montage 3b, 3c.

La présente invention n'est pas limitée au mode de réalisation qui a été explicitement décrit, mais elle en inclut les diverses variantes et généralisations contenues dans le domaine des revendications ci-après.

## Revendications

1. Elément de support (2) notamment un pontet, agencé dans un coffre (1) de véhicule automobile (10), comprenant des première (3a), deuxième (3b) et troisième (3c) faces de montage, une des faces de montage notamment la première face (3a), étant susceptible de coopérer avec un bras d'articulation (11) d'une porte de coffre (1) lorsqu'elle est en position complète d'ouverture, les faces de montage (3a, 3b, 3c) étant respectivement comprises dans des plans formant entre eux des angles supérieures ou égales à 90°.

2. Elément de support (2) selon la revendication précédente, **caractérisé en ce qu'**une des faces de montage notamment la première face (3a) comprend au moins un élément d'appui (14).

3. Elément de support (2) selon l'une quelconque des revendications précédentes, **caractérisé en ce que** :
- chaque face de montage (3a, 3b, 3c) est pourvue d'au moins une zone de fixation (5a, 5b, 5c) notamment comprenant au moins une ouverture (6a, 6b, 6c) destinée à la fixation d'un revêtement de coffre ou d'un élément d'appui (14), et/ou
- l'élément de support (2) comprend des pattes de fixation (7a, 7b, 7c) notamment des première (7a), deuxième (7b) et troisième (7c) pattes de fixation dudit élément de support (2) à un élément structurel (4) du coffre (1).

4. Elément de support (2) selon l'une quelconque des revendications précédentes, **caractérisé en ce qu'**il comprend au moins deux pattes de fixation notamment des deuxième et troisième pattes de fixation (7b, 7c), comprises dans un même plan.

5. Elément de support (2) selon l'une quelconque des revendications précédentes, **caractérisé en ce que** :
- l'élément de support (2) est une pièce monobloc, et/ou
- l'élément d'appui (14) est déformable.

6. Coffre (1) d'un véhicule (10) automobile notamment un coffre arrière, comprenant une enceinte (17) de chargement et une porte de coffre mobile en rotation susceptible de fermer ladite enceinte (17) lorsqu'elle est dans une position de fermeture, le coffre (1) comportant au moins un élément de support (2) selon l'une quelconque des revendications précédentes susceptible de coopérer avec ladite porte de coffre notamment avec au moins un bras d'articulation (11) de ladite porte de coffre lorsqu'elle est dans une position complète d'ouverture.

7. Coffre (1) selon la revendication précédente, **caractérisé en ce que** :
- chaque bras d'articulation comprend une interface d'appui (16) dépourvue d'un élément d'appui (14), ou
- chaque bras d'articulation comprend une interface d'appui (16) pourvue d'au moins un élément d'appui (14), et/ou
- ledit au moins un élément de support (2) est monté sur un élément structurel (4) de séparation d'un habitacle (18) du véhicule (10) de ladite enceinte (17) de chargement, et/ou
- l'élément de support (2) est monté de manière amovible sur ledit élément structurel (4).

8. Coffre (1) selon l'une quelconque des revendications 6 et 7 précédentes, **caractérisé en ce qu'**au moins un élément d'appui (14) et/ou au moins un élément de garniture du coffre (1) sont agencés sur les faces de montage (3a, 3b, 3c) de l'élément de support (2).

9. Véhicule (10), notamment de type tricorps, comprenant un coffre (1) selon l'une quelconque des revendications 6 à 8.

## Patentansprüche

1. Stützelement (2), insbesondere eine Brücke, das in einem Kofferraum (1) eines Kraftfahrzeugs (10) angeordnet ist, das eine erste (3a), eine zweite (3b) und eine dritte (3c) Montagefläche beinhaltet, wobei eine der Montageflächen, insbesondere die erste Fläche (3a), mit einem Schwenkarm (11) einer Tür eines Kofferraums (1) zusammenwirken kann, wenn diese komplett geöffnet ist, wobei die Montageflächen (3a, 3b, 3c) jeweils in Ebenen liegen, die zwischen sich Winkel von größer oder gleich 90° bilden.

2. Stützelement (2) nach dem vorhergehenden Anspruch, **dadurch gekennzeichnet, dass** eine der Montageflächen, insbesondere die erste Fläche (3a), mindestens ein Auflageelement (14) beinhaltet.

3. Stützelement (2) nach einem der vorhergehenden Ansprüche, **dadurch gekennzeichnet, dass**:
- jede Montagefläche (3a, 3b, 3c) mindestens eine Befestigungszone (5a, 5b, 5c) besitzt, die insbesondere mindestens eine Öffnung (6a, 6b, 6c) zur Befestigung einer Kofferraumverkleidung oder eines Auflageelements (14) beinhaltet, und/oder
- das Stützelement (2) Befestigungslaschen (7a, 7b, 7c), insbesondere eine erste (7a), eine zweite (7b) und eine dritte (7c) Lasche zur Befestigung des Stützelements (2) an einem Strukturelement (4) des Kofferraums (1) beinhaltet.

4. Stützelement (2) nach einem der vorhergehenden Ansprüche, **dadurch gekennzeichnet, dass** es mindestens zwei Befestigungslaschen, insbesondere eine zweite und dritte Befestigungslasche (7b, 7c) beinhaltet, die in einer gleichen Ebene liegen.

5. Stützelement (2) nach einem der vorhergehenden Ansprüche, **dadurch gekennzeichnet, dass**:
- das Stützelement (2) ein einteiliges Teil ist und/oder
- das Auflageelement (14) verformbar ist.

6. Kofferraum (1) eines Kraftfahrzeugs (10), insbesondere ein hinterer Kofferraum, der einen Laderaum (17) und eine drehbare Kofferraumtür, die in einer geschlossenen Position den Raum (17) schließen kann, beinhaltet, wobei der Kofferraum (1) mindestens ein Stützelement (2) nach einem der vorhergehenden Ansprüche beinhaltet, das mit der Kofferraumtür, insbesondere mit mindestens einem Schwenkarm (11) der Kofferraumtür zusammenwirken kann, wenn diese komplett geöffnet ist.

7. Kofferraum (1) nach dem vorhergehenden Anspruch, **dadurch gekennzeichnet, dass**:
- jeder Schwenkarm eine Auflageschnittstelle (16) beinhaltet, die kein Auflageelement (14) besitzt, oder
- jeder Schwenkarm eine Auflageschnittstelle (16) beinhaltet, die mindestens ein Auflageelement (14) besitzt, und/oder
- das mindestens eine Stützelement (2) an einem Strukturelement (4) montiert ist, das eine Fahrgastzelle (18) des Fahrzeugs (10) von dem Laderaum (17) trennt, und/oder
- das Stützelement (2) abnehmbar an dem Strukturelement (4) montiert ist.

8. Kofferraum (1) nach einem der vorhergehenden Ansprüche 6 und 7, **dadurch gekennzeichnet, dass** mindestens ein Auflageelement (14) und/oder mindestens ein Auskleidungselement des Kofferraums (1) auf den Montageflächen (3a, 3b, 3c) des Stützelements (2) angeordnet ist.

9. Fahrzeug (10), insbesondere eine Limousine, die einen Kofferraum (1) nach einem der Ansprüche 6 bis 8 beinhaltet.

## Claims

1. Support element (2), in particular a bridge, arranged in a trunk (1) of a motor vehicle (10), comprising a first mounting face (3a), a second mounting face (3b) and a third mounting face (3c), one of the mounting faces, in particular the first face (3a), being adapted to cooperate with an articulation arm (11) of a trunk lid (1) when it is in a completely open position the mounting faces (3a, 3b, 3c) are contained in respective planes forming between them angles greater than or equal to 90°.

2. Support element (2) according to the preceding claim, **characterized in that** one of the mounting faces, in particular the first face (3a), comprises at least one bearing element (14).

3. Support element (2) according to either one of the preceding claims, **characterized in that**:
- each mounting face (3a, 3b, 3c) includes at least one fixing zone (5a, 5b, 5c) comprising in particular at least one opening (6a, 6b, 6c) intended for fixing a trunk lining or a bearing element (14), and/or
- the support element (2) comprises fixing lugs (7a, 7b, 7c), in particular a first fixing lug (7a), a second fixing lug (7b) and a third fixing lug (7c), for fixing said support element (2) to a structural element (4) of the trunk (1).

4. Support element (2) according to any one of the preceding claims, **characterized in that** it comprises at least two coplanar fixing lugs, in particular second and third fixing lugs (7b, 7c).

5. Support element (2) according to any one of the preceding claims, **characterized in that**:
- the support element (2) is a one-piece part, and/or
- the bearing element (14) is deformable.

6. Trunk (1) of a motor vehicle (10), in particular a rear trunk, comprising a load compartment (17) and a trunk lid mobile in rotation adapted to close said enclosure (17) when it is in a closed position, the trunk (1) including at least one support element (2) according to any one of the preceding claims adapted to cooperate with said trunk lid, in particular with at least one articulation arm (11) of said trunk lid, when it is in a completely open position.

7. Trunk (1) according to the preceding claim, **characterized in that**:
- each articulation arm comprises a bearing interface (16) with no bearing element (14), or
- each articulation arm comprises a bearing interface (16) including at least one bearing element (14), and/or
- said at least one support element (2) is mounted on a structural element (4) separating a passenger compartment (18) of the vehicle (10) from said load compartment (17), and/or
- the support element (2) is removably mounted on said structural element (4).

8. Trunk (1) according to either one of the preceding Claims 6 and 7, **characterized in that** at least one bearing element (14) and/or at least one lining element of the trunk (1) are arranged on the mounting faces (3a, 3b, 3c) of the support element (2).

9. Vehicle (10), notably of the three-box type, comprising a trunk (1) according to any one of Claims 6 to 8.
